# EUROPEAN PATENT SPECIFICATION

(11) **EP 4 103 644 B1**
(45) Date of publication and mention of the grant of the patent: **26.11.2025**
(21) Application number: 21710134.4
(22) Date of filing: 10.02.2021
(51) Int. Cl.: C08K 5/00

(54) **FLAME RETARDANT COPOLYESTER COMPOSITIONS**
FLAMMENHEMMENDE COPOLYESTERZUSAMMENSETZUNGEN
COMPOSITIONS DE COPOLYESTER IGNIFUGES

(30) Priority: 10.02.2020 US 202062972341 P
(43) Date of publication of application: 21.12.2022
(73) Proprietor: Eastman Chemical Company, Kingsport, TN 37660 (US)
(72) Inventor: YOUNG, Robert, Erik, Kingsport, TN 37663 (US); HOFMANN, John, Thomas, Kingsport, TN 37660 (US)
(74) Representative: Ricker, Mathias
(86) International application number: PCT/US2021/017370
(87) International publication number: WO 2021/163126

(56) References cited:
- EP-A2- 1 831 309
- WO-A1-2006/127831
- US-A1- 2019 194 448

## Description

### FIELD OF THE INVENTION

The present invention relates to the use of a combination of certain flame retardant additives in a copolyester to improve the flame retardant properties of the copolyester composition while retaining impact properties. More specifically, the present invention relates to the use of a brominated compound flame retardant in copolyesters to improve the flame retardant properties while retaining impact, glass transition temperature, and clarity properties.

### BACKGROUND OF THE INVENTION

Flame retardant materials are added to some polymers to improve flame resistance, particularly to meet specific fire standards such as UL94 V-2. However, the addition of flame retardant materials in amounts sufficient to meet the fire standards may have a deleterious effect on impact resistance, glass transition temperature, and clarity of the copolyester film or sheet containing an effective amount of the flame retardant materials.

Copolyesters can be flame retarded in a variety of means but these methods have some drawbacks. Halogen compounds such as Dechlorane Plus^{®} (OxyChem^{®}), decabromodiphenyl oxide or decabromodiphenyl ether can be effective flame retardants, but are objectionable in the marketplace due to potential concerns of bio-accumulation. Liquid phosphorous compounds such as triphenyl phosphite or triphenyl phosphate can flame retard copolyesters but at effective use levels, they plasticize and soften the copolyester thus reducing heat resistance to distortion. Solid flame retardants in the melamine and phosphorous classes can be used individually as well, but in the past, the concentrations needed to achieve flame retardancy have made the copolyester brittle or reduced tensile strength properties. Plastics used in many applications such as lighting diffusers, light emitting diode (LED) light fixtures, electronics applications, wall protection products and housings for handheld and stationary appliances all have flammability requirements specified in various codes or standards. These applications also have durability or physical property requirements in addition to flammability requirements. WO 2006/127831 A1 relates to films or sheets for use in LCDs comprising at least one polymer having a combination of two or more properties, chosen from at least one of the following: toughness, high glass transition temperatures, high impact strength, hydrolytic stability, chemical resistance, long crystallization half-times, low ductile to brittle transition temperatures, good color, and clarity, lower density and/or thermoformability of polyesters while retaining processability on the standard equipment used in the industry. Examples 1A-1H, 2, 3, 3A-3I, 4A, 4B, 5, 5A-5F, 7A-7Q, 8, 9, 10, 11, 13, 14 describe the preparation of a copolyester from dimethyl terephthalate, 1,4-cyclohexanedimethanol and another diol like 2,2,4,4-tetramethyl-1,3-cyclobutanediol. According to paragraph [0243], the flame retardant film or sheet will typically give a V2 or greater rating in a UL94 burn test. For many examples, the notched Izod of 3,2 mm thick at 23°C measured according to ASTM256 amounts more than 400 J/m (see table 3, examples A-I, table 4, examples A-B, table 5, examples A-E). Moreover, the haze value measured on 3,2 mm is described to be of about 0,2 to 3%, less than 5%. Furthermore, paragraph [0266] stipulates that exemplary flame- retardants include organic halogenated compounds, including decabromodiphenyl ether and the like as well as inorganic compounds.

There exists a need for improved copolyester compositions comprising effective flame retardants and film or sheets which exhibit good flame resistance, good clarity and impact resistance.

### BRIEF SUMMARY OF THE INVENTION

Applicants have unexpectedly discovered an improved copolyester composition comprising an effective amount of certain brominated flame retardants useful for making articles such as films, sheets, molded parts, or profiles which exhibit good flame resistance and good clarity while maintaining glass transition temperature and impact resistance. The invention is set forth in the appended claims.

In one aspect the present invention comprises a copolyester composition comprising:
(a) from greater than 90 to about 98 weight % of the copolyester, the copolyester comprising:
   (i) a diacid component comprising
      from 70 to 100 mole % residues of terephthalic acid,
      from 0 to 30 mole % residues of a modifying aromatic diacid having from 8 to 12 carbon atoms, and
      from 0 to 10 mole % residues of an aliphatic dicarboxylic acid; and
   (ii) a glycol component comprising
      from 1 to 95 mole % cyclohexanedimethanol residues and
      from 5 to 99 mole % of a modifying glycol having 2 to 20 carbon atoms;
(b) from about 2 to about 10 weight % of a flame retardant comprising a brominated compound,
   decabromodiphenyl ethane, tetrabromo bisphenol A and hexabromo cyclodecane,
   wherein the copolyester composition has a UL 94 V-2 rating,
   wherein the notched Izod impact strength is greater than about 400 Joules/m measured according to ASTM D256;
   wherein the copolyester composition in the form of a placque at approximately 3.2 mm thickness has less than about 10 % haze according to ASTM D1003,
   wherein the weight % is based on the weight of the copolyester, wherein the total mole % of the dicarboxylic acid component is 100 mole % and the total mole % of the glycol component is 100 mole %.

In another aspect the present invention comprises an article comprising, a copolyester composition comprising:
(a) from greater than 90 to about 98 weight % of the copolyester, the copolyester comprising:
   (i) a diacid component comprising
      from 70 to 100 mole % residues of terephthalic acid,
      from 0 to 30 mole % residues of a modifying aromatic diacid having from 8 to 12 carbon atoms, and
      from 0 to 10 mole % residues of an aliphatic dicarboxylic acid; and
   (ii) a glycol component comprising
      from 1 to 95 mole % cyclohexanedimethanol residues and
      from 5 to 99 mole % of a modifying glycol having 2 to 20 carbon atoms;
(b) from about 2 to about 10 weight % of a flame retardant comprising a brominated compound, selected from the group consisting of decabromodiphenyl ethane, tetrabromo bisphenol A and hexabromo cyclodecane,
   wherein the copolyester composition has a UL 94 V-2 rating,
   wherein the notched Izod impact strength is greater than about 400 Joules/m according to ASTM D256
   wherein the copolyester composition in the form of a placque at approximately 3.2 mm thickness has less than about 10 % haze according to ASTM D1003,
   wherein the weight % is based on the weight of the copolyester, wherein the total mole % of the dicarboxylic acid component is 100 mole % and the total mole % of the glycol component is 100 mole %.

In another aspect the present invention comprises a method of making a copolyester composition, the method comprising blending
(a) from greater than 90 to about 98 weight % of the copolyester, the copolyester comprising:
   (i) a diacid component comprising
      from 70 to 100 mole % residues of terephthalic acid,
      from 0 to 30 mole % residues of a modifying aromatic diacid having from 8 to 12 carbon atoms, and
      from 0 to 10 mole % residues of an aliphatic dicarboxylic acid; and
   (ii) a glycol component comprising
      from 1 to 95 mole % cyclohexanedimethanol residues and
      from 5 to 99 mole % of a modifying glycol having 2 to 20 carbon atoms; and
(b) from about 2 to about 10 weight % of a flame retardant comprising a brominated compound, selected from the group consisting of decabromodiphenyl ethane, tetrabromo bisphenol A and hexabromo cyclodecane
   wherein the copolyester composition has a UL 94 V-2 rating,
   wherein the notched Izod impact strength is greater than about 400 Joules/m according to ASTM D256;
   wherein the copolyester composition in the form of a placque at approximately 3.2 mm thickness has less than about 10 % haze according to ASTM D1003,
   wherein the weight % is based on the weight of the copolyester, wherein the total mole % of the dicarboxylic acid component is 100 mole % and the total mole % of the glycol component is 100 mole %.

In another embodiment, in the copolyester composition the glycol component comprises from about 60 to about 95 mole % cyclohexanedimethanol residues and from 5 to about 40 mole % of 2,2,4,4-tetramethylcyclobutane-1,3-diol residues.

In one aspect the invention comprises an article comprising any of the copolyester compositions described above.

In one aspect the invention comprises an article comprising any of the copolyester compositions described above wherein the article is produced by extrusion, injection molding or calendering.

In one aspect the invention comprises a film, sheet, molded part, or profile comprising any of the copolyester compositions described above.

### DETAILED DESCRIPTION

The present invention may be understood more readily by reference to the following detailed description of certain embodiments of the invention and the working examples.

In accordance with the purpose(s) of this invention, certain embodiments of the invention are described in the Summary of the Invention and are further described herein below. Also, other embodiments of the invention are described herein.

The present invention provides a copolyester composition comprising a copolyester and a brominated compound flame retardant in which the copolyester composition exhibits good flame retardancy, clarity and good puncture resistance, articles made therefrom, and methods of making the composition and articles. The present invention involves the use of a certain class of s flame retardant additives to improve the flame retardant properties while retaining impact and clarity properties. The flame retardant additive is a brominated compound. When the flame retardant is added at the appropriate concentration with a copolyester, a flame retarded composition possesses a notched Izod impact strength which is greater than about 400 Joules/m according to ASTM D256 while achieving a UL94 V-2 rating and good clarity with low haze according to ASTM D1003 (as measured in the form of a placque at approximately 3.2 mm thickness).

The brominated compound is chosen from decabromo diphenyl ether, tetrabromo bisphenol A, and hexabromo cyclodecane.

In another embodiment, the brominated compound is the commercially available product, Firemaster^{®} 2100R decabromo diphenyl ether (Lanxess).

Copolyesters useful in the present invention comprise residues of an aromatic diacid and residues of two or more glycols.

The term "copolyester," as used herein, is intended to include "polyesters" and is understood to mean a synthetic polymer prepared by the reaction of one or more difunctional carboxylic acids and/or multifunctional carboxylic acids with one or more difunctional hydroxyl compounds and/or multifunctional hydroxyl compounds. Typically the difunctional carboxylic acid can be a dicarboxylic acid and the difunctional hydroxyl compound can be a dihydric alcohol such as, for example, glycols. Furthermore, as used in this application, the interchangeable terms "diacid" or "dicarboxylic acid" include multifunctional acids, such as branching agents. The term "glycol" as used in this application includes, but is not limited to, diols, glycols, and/or multifunctional hydroxyl compounds. Alternatively, the difunctional carboxylic acid may be a hydroxy carboxylic acid such as, for example, p-hydroxybenzoic acid, and the difunctional hydroxyl compound may be an aromatic nucleus bearing 2 hydroxyl substituents such as, for example, hydroquinone. The term "residue," as used herein, means any organic structure incorporated into a polymer through a polycondensation and/or an esterification reaction from the corresponding monomer. The term "repeating unit," as used herein, means an organic structure having a dicarboxylic acid residue and a diol residue bonded through a carbonyloxy group. Thus, for example, the dicarboxylic acid residues may be derived from a dicarboxylic acid monomer or its associated acid halides, esters, salts, anhydrides, or mixtures thereof. As used herein, therefore, the term dicarboxylic acid is intended to include dicarboxylic acids and any derivative of a dicarboxylic acid, including its associated acid halides, esters, half-esters, salts, half-salts, anhydrides, mixed anhydrides, or mixtures thereof, useful in a reaction process with a diol to make polyester. As used herein, the term "terephthalic acid" is intended to include terephthalic acid itself and residues thereof as well as any derivative of terephthalic acid, including its associated acid halides, esters, half-esters, salts, half-salts, anhydrides, mixed anhydrides, or mixtures thereof or residues thereof useful in a reaction process with a diol to make polyester. The term "modifying aromatic diacid" means an aromatic dicarboxylic acid other the terephthalic acid. The term "modifying glycol" means a glycol other than 1,4-cyclohexane dimethanol.

In one embodiment, terephthalic acid may be used as the starting material. In another embodiment, dimethyl terephthalate may be used as the starting material. In another embodiment, mixtures of terephthalic acid and dimethyl terephthalate may be used as the starting material and/or as an intermediate material.

The copolyesters used in the present invention typically can be prepared from dicarboxylic acids and diols which react in substantially equal proportions and are incorporated into the copolyester polymer as their corresponding residues. The copolyesters of the present invention, therefore, can contain substantially equal molar proportions of acid residues (100 mole%) and diol (and/or multifunctional hydroxyl compounds) residues (100 mole%) such that the total moles of repeating units is equal to 100 mole%. The mole percentages provided in the present disclosure, therefore, may be based on the total moles of acid residues, the total moles of diol residues, or the total moles of repeating units. For example, a copolyester containing 30 mole% isophthalic acid, based on the total acid residues, means the copolyester contains 30 mole% isophthalic acid residues out of a total of 100 mole% acid residues. Thus, there are 30 moles of isophthalic acid residues among every 100 moles of acid residues. In another example, a copolyester containing 30 mole% 1,4-cyclohexanedimethanol, based on the total diol residues, means the copolyester contains 30 mole% 1,4-cyclohexanedimethanol residues out of a total of 100 mole% diol residues. Thus, there are 30 moles of 1,4-cyclohexanedimethanol residues among every 100 moles of diol residues.

The copolyesters comprise 70 to 100 mole % of an aromatic diacid. In one embodiment, the copolyesters comprise 70 to 100 mole % of terephthalic acid (TPA). Alternatively, the copolyesters comprise 80 to 100 mole % TPA, or 90 to 100 mole % TPA or 95 to 100 mole % TPA or 100 mole % TPA. For the purposes of this disclosure, the terms "terephthalic acid" and "dimethyl terephthalate" are used interchangeably herein.

In addition to terephthalic acid, the dicarboxylic acid component of the copolyester useful in the invention can comprise up to 30 mole %, up to 20 mole %, up to 10 mole %, up to 5 mole %, or up to 1 mole % of one or more modifying aromatic dicarboxylic acids. Yet another embodiment contains 0 mole % modifying aromatic dicarboxylic acids. Thus, if present, it is contemplated that the amount of one or more modifying aromatic dicarboxylic acids can range from any of these preceding endpoint values including, for example, from 0.01 to 30 mole %, 0.01 to 20 mole %, from 0.01 to 10 mole %, from 0.01 to 5 mole % and from 0.01 to 1 mole. In one embodiment, modifying aromatic dicarboxylic acids that may be used in the present invention include but are not limited to those having up to 20 carbon atoms, and which can be linear, para-oriented, or symmetrical. Examples of modifying aromatic dicarboxylic acids which may be used in this invention include, but are not limited to, isophthalic acid, 4,4'-biphenyldicarboxylic acid, 1,4-, 1,5-, 2,6-, 2,7-naphthalenedicarboxylic acid, and trans-4,4'-stilbenedicarboxylic acid, and esters thereof. In one embodiment, the modifying aromatic dicarboxylic acid is isophthalic acid.

The carboxylic acid component of the copolyesters useful in the invention can be further modified with up to 10 mole %, such as up to 5 mole % or up to 1 mole % of one or more aliphatic dicarboxylic acids containing 2-16 carbon atoms, such as, for example, malonic, succinic, glutaric, adipic, pimelic, suberic, azelaic and dodecanedioic dicarboxylic acids. Certain embodiments can also comprise 0.01 or more mole %, such as 0.1 or more mole %, 1 or more mole %, 5 or more mole %, or 10 or more mole % of one or more modifying aliphatic dicarboxylic acids. Yet another embodiment contains 0 mole % modifying aliphatic dicarboxylic acids. Thus, if present, it is contemplated that the amount of one or more modifying aliphatic dicarboxylic acids can range from any of these preceding endpoint values including, for example, from 0.01 to 10 mole % and from 0.1 to 10 mole %. The total mole % of the dicarboxylic acid component is 100 mole %.

Esters of terephthalic acid and the other modifying dicarboxylic acids or their corresponding esters and/or salts may be used instead of the dicarboxylic acids. Suitable examples of dicarboxylic acid esters include, but are not limited to, the dimethyl, diethyl, dipropyl, diisopropyl, dibutyl, and diphenyl esters. In one embodiment, the esters are chosen from at least one of the following: methyl, ethyl, propyl, isopropyl, and phenyl esters.

The copolyesters useful in the copolyesters compositions of the invention can comprise from 0 to 10 mole %, for example, from 0.01 to 5 mole %, from 0.01 to 1 mole %, from 0.05 to 5 mole %, from 0.05 to 1 mole %, or from 0.1 to 0.7 mole %, based the total mole percentages of either the diol or diacid residues; respectively, of one or more residues of a branching monomer, also referred to herein as a branching agent, having 3 or more carboxyl substituents, hydroxyl substituents, or a combination thereof. In certain embodiments, the branching monomer or agent may be added prior to and/or during and/or after the polymerization of the polyester. The copolyester(s) useful in the invention can thus be linear or branched.

Examples of branching monomers include, but are not limited to, multifunctional acids or multifunctional alcohols such as trimellitic acid, trimellitic anhydride, pyromellitic dianhydride, trimethylolpropane, glycerol, pentaerythritol, citric acid, tartaric acid, 3-hydroxyglutaric acid and the like. In one embodiment, the branching monomer residues can comprise 0.1 to 0.7 mole % of one or more residues chosen from at least one of the following: trimellitic anhydride, pyromellitic dianhydride, glycerol, sorbitol, 1,2,6-hexanetriol, pentaerythritol, trimethylolethane, and/or trimesic acid. The branching monomer may be added to the polyester reaction mixture or blended with the polyester in the form of a concentrate as described, for example, in U. S. Patent Numbers 5,654,347 and 5,696,176.

The 1,4-cyclohexanedimethanol may be cis, trans, or a mixture thereof, for example a cis/trans ratio of 60:40 to 40:60. In another embodiment, the trans-1,4-cyclohexanedimethanol can be present in an amount of 60 to 80 mole %. Alternatively, 1,2- and/or 1-3-cyclohexanedimethanol may be used individually or in combination with each other and/or 1,4-cyclohexanedimethanol.

The glycol component of the copolyester portion of the copolyester composition useful in all of the embodiments of the invention can contain modifying glycols which are not ethylene glycol or 1,4-cyclohexanedimethanol; in one embodiment, the copolyesters useful in the invention may contain less than 15 mole % of one or more modifying glycols.

Modifying glycols useful in the copolyesters useful in all embodiments of the invention refer to diols other than ethylene glycol and 1,4-cyclohexanedimethanol and may contain 2 to 16 carbon atoms. Examples of suitable modifying glycols include, but are not limited to, 1,2-propanediol, 1,3-propanediol, neopentyl glycol, 1,4-butanediol, 1,5-pentanediol, 1,6-hexanediol, p-xylene glycol, 2,2,4,4-tetramethylcyclobutane-1,3-diol or mixtures thereof. In another embodiment, the modifying glycols are 1,3-propanediol and/or 1,4-butanediol.

In another aspect of the disclosure comparative to the invention a copolyester composition is disclosed comprising at least one polyester, which comprises:
(a) a dicarboxylic acid component comprising:
   i) 70 to 100 mole % of terephthalic acid residues;
   ii) 0 to 30 mole % of aromatic dicarboxylic acid residues having up to 20 carbon atoms; and
   iii) 0 to 10 mole % of aliphatic dicarboxylic acid residues having up to 16 carbon atoms; and
(b) a glycol component comprising:
   i) 5 to 45 mole % of 2,2,4,4-tetramethyl-1,3-cyclobutanediol (TMCD) residues; and
   ii) 65 to 95 mole % of 1,4-cyclohexanedimethanol (CHDM) residues, wherein the total mole % of the dicarboxylic acid component is 100 mole %, the total mole % of the glycol component is 100 mole %; and
   wherein the inherent viscosity of the polyester is from 0.1 to 1.2 dL/g as determined in 60/40 (wt/wt) phenol/tetrachloroethane at a concentration of 0.5 g/100 ml at 25° C.; and wherein the polyester has a Tg of from 100 to 200° C.

Said polyesters can contain less than 15 mole % ethylene glycol residues, such as, for example, 0.01 to less than 15 mole % ethylene glycol residues. In embodiments, the polyesters useful in the invention contain less than 10 mole %, or less than 5 mole %, or less than 4 mole %, or less than 2 mole %, or less than 1 mole % ethylene glycol residues, such as, for example, 0.01 to less than 10 mole %, or 0.01 to less than 5 mole %, or 0.01 to less than 4 mole %, or 0.01 to less than 2 mole %, or 0.01 to less than 1 mole %, ethylene glycol residues. In one embodiment, the polyesters useful in the invention contain no ethylene glycol residues.

The glycol component for said polyesters can include but is not limited to at least one of the following combinations of ranges: 5 to less than 40 mole % 2,2,4,4-tetramethyl-1,3-cyclobutanediol and greater than 60 up to 95 mole % 1,4-cyclohexanedimethanol; 10 to 40 mole % 2,2,4,4-tetramethyl-1,3-cyclobutanediol and 60 to 90 mole % 1,4-cyclohexanedimethanol; 10 to 35 mole % 2,2,4,4-tetramethyl-1,3-cyclobutanediol and 65 to 90 mole % 1,4-cyclohexanedimethanol; 10 to 30 mole % 2,2,4,4-tetramethyl-1,3-cyclobutanediol and 70 to 90 mole % 1,4-cyclohexanedimethanol; 10 to 25 mole % 2,2,4,4-tetramethyl-1,3-cyclobutanediol and 75 to 90 mole % 1,4cyclohexanedimethanol; 15 to 40 mole % 2,2,4,4-tetramethyl-1,3-cyclobutanediol and 60 to 85 mole % 1,4-cyclohexanedimethanol; 15 to 35 mole % 2,2,4,4-tetramethyl-1,3-cyclobutanediol and 65 to 85 mole % 1,4-cyclohexanedimethanol; 15 to 30 mole % 2,2,4,4-tetramethyl-1,3-cyclobutanediol and 70 to 85 mole % 1,4-cyclohexanedimethanol; 15 to 25 mole % 2,2,4,4-tetramethyl-1,3-cyclobutanediol and 75 to 85 mole % 1,4-cyclohexanedimethanol; 15 to 20 mole % 2,2,4,4-tetramethyl-1,3-cyclobutanediol and 75 to 80 mole % 1,4-cyclohexanedimethanol; and 17 to 23 mole % 2,2,4,4-tetramethyl-1,3-cyclobutanediol and 77 to 83 mole % 1,4-cyclohexanedimethanol.

In certain embodiments, the glycol component of the polyester portion of the polyester composition can contain 25 mole % or less of one or more modifying glycols which are not 2,2,4,4-tetramethyl-1,3-cyclobutanediol or 1,4-cyclohexanedimethanol; in one embodiment, the polyesters useful in the invention may contain less than 15 mole % of one or more modifying glycols. In another embodiment, the polyesters can contain 10 mole % or less of one or more modifying glycols. In another embodiment, the polyesters can contain 5 mole % or less of one or more modifying glycols. In another embodiment, the polyesters can contain 3 mole % or less of one or more modifying glycols. In another embodiment, the polyesters can contain 0 mole % modifying glycols. Certain embodiments can also contain 0.01 or more mole %, such as 0.1 or more mole %, 1 or more mole %, 5 or more mole %, or 10 or more mole % of one or more modifying glycols. Thus, if present, it is contemplated that the amount of one or more modifying glycols can range from any of these preceding endpoint values including, for example, from 0.01 to 15 mole % and from 0.1 to 10 mole %.

In embodiments, modifying glycols in the polyesters can refer to diols other than 2,2,4,4,-tetramethyl-1,3-cyclobutanediol and 1,4-cyclohexanedimethanol and may contain 2 to 16 carbon atoms. Examples of suitable modifying glycols in certain embodiments include, but are not limited to, ethylene glycol, 1,2-propanediol, 1,3-propanediol, neopentyl glycol, 1,4-butanediol, 1,5-pentanediol, 1,6-hexanediol, p-xylene glycol or mixtures thereof. In one embodiment, the modifying glycol is ethylene glycol. In another embodiment, the modifying glycols are 1,3-propanediol and/or 1,4-butanediol. In another embodiment, ethylene glycol is excluded as a modifying diol. In another embodiment, 1,3-propanediol and 1,4-butanediol are excluded as modifying diols. In another embodiment, 2,2-dimethyl-1,3-propanediol is excluded as a modifying diol.

In one aspect, the copolyester compositions of the present invention is visually clear. The term "visually clear" is defined herein as a low amount of cloudiness, haziness, and/or muddiness, when inspected visually.

In one embodiment, molded samples of the invention can be measured for optical (light transmission and haze) using ASTM D 1003. These measurements can be performed on samples in the form of a placque at approximately 3.2 mm thickness. The term "% haze", as used herein, refers to haze values determined according to ASTM Method D1003 using a HunterLab UltraScan Sphere 8000 Colorimeter manufactured by Hunter Associates Laboratory, Inc., Reston, Va. using Hunter's Universal Software (version 3.8) (% Haze=100*Diffuse Transmission/Total Transmission). For the compositions of the invention, haze is determined by molding or casting the composition into in the form of a placque at approximately 3.2 mm thickness and measuring the haze according to D1003 and/or the procedure described in the examples.

In one aspect of the invention, each embodiment of the invention can have haze values of from 0 to 10, or 0 to 5, or 1 to 10, or 1 to 5, or 5 to 10 percent as determined by ASTM Method D1003 referred to above. While these haze values can be present at any percent loading, in one embodiment, the polymer blends of the invention can have a haze value of less than 10% at up to 10% by weight of at least one flame retardant wherein the haze value is determined by ASTM Method D1003 as described above and where the weight percentage of the flame retardant is based on the total weight of the copolyester.

In certain embodiments of the invention, the copolyester composition comprises and from 0.5 to 2.0 weight % of a drip suppressant. Certain embodiments of the present invention comprise a copolyester composition comprising the flame retardant Firemaster^{®} 2100R and from 0.5 to 2.0 weight % of a drip suppressant. The drip suppressant comprises a fluoropolymer. The fluoropolymer includes, but is not limited to, Teflon^{™} polytetrafluoroethylene.

The polyester portion of the copolyester compositions useful in the invention can be made by processes known from the literature such as, for example, by processes in homogenous solution, by transesterification processes in the melt, and by two phase interfacial processes. Suitable methods include, but are not limited to, the steps of reacting one or more dicarboxylic acids with one or more glycols at a temperature of 100°C to 315°C at a pressure of 0.1 to 760 mm Hg for a time sufficient to form a copolyester. See U. S. Patent Number 3,772,405 for methods of producing copolyesters.

In another aspect, the invention relates to films or sheets comprising a copolyester produced by a process comprising:
(I) heating a mixture comprising the monomers useful in any of the copolyesters in the invention in the presence of a catalyst at a temperature of 150 to 240°C for a time sufficient to produce an initial copolyester;
(II) heating the initial copolyester of step (I) at a temperature of 240 to 320°C for 1 to 4 hours; and
(III) removing any unreacted glycols.

Suitable catalysts for use in this process include, but are not limited to, organo-zinc or tin compounds. The use of this type of catalyst is well known in the art. Examples of catalysts useful in the present invention include, but are not limited to, zinc acetate, butyltin tris-2-ethylhexanoate, dibutyltin diacetate, and dibutyltin oxide. Other catalysts may include, but are not limited to, those based on titanium, zinc, manganese, lithium, germanium, and cobalt. Catalyst amounts can range from 10 ppm to 20,000 ppm or 10 to 10,000 ppm, or 10 to 5000 ppm or 10 to 1000 ppm or 10 to 500 ppm, or 10 to 300 ppm or 10 to 250 based on the catalyst metal and based on the weight of the final polymer. The process can be carried out in either a batch or continuous process.

Typically, step (I) can be carried out until 50% by weight or more of the glycol has been reacted. Step (I) may be carried out under pressure, ranging from atmospheric pressure to 100 psig. The term "reaction product" as used in connection with any of the catalysts useful in the invention refers to any product of a polycondensation or esterification reaction with the catalyst and any of the monomers used in making the polyester as well as the product of a polycondensation or esterification reaction between the catalyst and any other type of additive.

Typically, step (II) and step (III) can be conducted at the same time. These steps can be carried out by methods known in the art such as by placing the reaction mixture under a pressure ranging from 0.002 psig to below atmospheric pressure, or by blowing hot nitrogen gas over the mixture.

In one aspect a copolyester composition concentrate is disclosed comprising the copolyester and a brominated compound flame retardant, wherein the concentrate comprises greater than 15 weight % of the flame retardant based on the total weight of the concentrate. In one aspect the invention comprises a copolyester composition concentrate comprising the copolyester and a flame retardant consisting essentially of an brominated compound, wherein the concentrate comprises greater than 15 weight % of the flame retardant based on the total weight of the concentrate. In one aspect the invention comprises a copolyester composition concentrate comprising the copolyester and a flame retardant consisting essentially of Firemaster^{®} 2100R decabromo diphenyl ether, wherein the concentrate comprises greater than 15 weight % of the flame retardant based on the total weight of the concentrate. Alternatively, the flame retardant in the concentrate may comprise more than 20 weight % or more than 30 weight % or more than 40 weight % or more than 50 weight % or more than 60 weight % or more than 70 weight % or more than 80 weight % or more than 90 weight % of the copolyester concentrate based on the total weight of the concentrate.

The flame retardant can be incorporated into the copolyester in a concentrate form by any conventional method for ultimate formation into an article.

The flame retardant can be incorporated in a plastics compounding line such as a twin screw compounding line to form a copolyester composition concentrate. In this case copolyester pellets are dried for 4 to 6 hours at 150°F to 160°F (65.6°C to 71.1°C) to reduce moisture. The pellets are then fed into the throat of the extruder and melted from 430°F to 520°F (221°C to 271°C) to produce a viscous thermoplastic material. Alternatively, the flame retardant is pre-blended and added as a single powder with a loss-in-weight feeder or added singly in a loss-in-weight feeder. The rotation of the two screws disperses the flame retardant into the copolyester. The mixture is then extruded through a die to produce multiple strands. In certain embodiments, the strands are fed through a water trough to cool the pellets. Upon exiting the water trough, the strands are dried and fed into a dicer to cut the strands into pellets. Alternatively, the mixture can be extruded through a circular flat plate die with multiple openings into water. The flat plate die has a rotating cutter that slices the strands as they extrude from the die to produce pellets. The continuous flow of water cools the pellets and transports them to a drying section, typically a centrifuge to separate the pellets from the water.

Alternatively, the flame retardants are incorporated into a plastics compounding line such as a two-rotor continuous compounding mixer (such as a Farrell Continuous Mixer) to form a copolyester composition concentrate. In this case copolyester pellets are dried for 4 to 6 hours at 150°F to 160°F (65.6°C to 71.1°C) to reduce moisture. The copolyester pellets and the flame retardant are fed into the throat of the continuous mixer and melted into a homogenous mixture at 430°F to 520°F (221°C to 271° C). The output rate of the mixer is controlled by varying the area of a discharge orifice. The melt can be sliced off into 'loaves' and fed to a two roll mill or the throat of a single screw extruder. In the case of the melt being fed to a two-roll mill, the melt covers one of the rolls to form a sheet of the concentrate which is cut into strips which are fed to the throat of a single screw extruder. The mixture is then extruded through a die to produce multiple strands. The strands are fed through a water trough to cool the pellets. Upon exiting the water trough, the strands are dried and fed into a dicer to cut the strands into pellets. Alternatively, the mixture can be extruded through a circular flat plate die with multiple openings into water. The flat plate die has a rotating cutter that slices the strands as they extrude from the die to produce pellets. The continuous flow of water cools the pellets and transports them to a drying section, typically a centrifuge to separate the pellets from the water. In the case of the 'loaves' (relatively large portions of the concentrate) being fed to a single screw extruder, the mixture is extruded through a die to produce multiple strands. The strands can be fed through a water trough to cool the pellets. Upon exiting the water trough, the strands are dried and fed into a dicer to cut the strands into pellets. Alternatively, the mixture can be extruded through a circular flat plate die with multiple openings into water. The flat plate die has a rotating cutter that slices the strands as they extrude from the die to produce pellets. The continuous flow of water cools the pellets and transports them to a drying section, typically a centrifuge to separate the pellets from the water.

Alternatively, the flame retardant is incorporated in a high-intensity mixer such a Banbury^{®} batch type mixer to form a copolyester composition concentrate. In this case, the copolyester pellets can be dried for 4 to 6 hours at 150°F to 160°F (65.6°C to 71.1°C) to reduce moisture. The copolyester pellets and the flame retardants are charged into a high-intensity mixer and a ram lowered to compress the pellet/flame retardants mixture into the mixing chamber. Two rotating mixer blades melt the pellets and disperse the flame retardant into the melt. When the desired temperature is reached, a door is opened in the bottom of the mixer and the mixture is dropped onto a two roll mill. A ribbon from the two roll mill can then be fed to a single screw extruder. The mixture is then extruded through a die to produce multiple strands. The strands can be fed through a water trough to cool the pellets. Upon exiting the water trough, the strands are dried and fed into a dicer to cut the strands into pellets. Alternatively, the mixture can be extruded through a circular flat plate die with multiple openings into water. The flat plate die has a rotating cutter that slices the strands as they extrude from the die to produce pellets. The continuous flow of water cools the pellets and transports them to a drying section, typically a centrifuge to separate the pellets from the water.

The present invention includes plastic articles comprising the copolyester compositions. The plastic articles may be made by processes comprising, but not limited to, extrusion of the copolyester composition to produce a continuous flat sheet or profile or injection molding to create discrete articles or calendering to produce a continuous film or sheet.

Films and/or sheets useful in the present invention can be of any thickness which would be apparent to one of ordinary skill in the art. In one embodiment, the films(s) of the invention have a thickness of less than 30 mils or less than 20 mils or less than 10 mils or less than 5 mils. In one embodiment, the sheets of the invention have a thickness of greater than 30 mils. In one embodiment, the sheets of the invention have a thickness of from 30 mils to 100 mils or from 30 mils to 200 mils or from 30 mils to 500 mils.

The invention further relates to the films and/or sheets comprising the polyester compositions of the invention. The methods of forming the polyesters into films and/or sheets are well known in the art. Examples of films and/or sheets of the invention include, but are not limited to, extruded films and/or sheets, calendered films and/or sheets, compression molded films and/or sheets, injection molded films or sheets, and solution casted films and/or sheets. Methods of making film and/or sheet include but are not limited to extrusion, calendering, extrusion molding, compression molding, and solution casting. These films or sheets may be made or subjected to further processing such as orientation (uniaxial or biaxial), heat setting, surface treatment, etc.

In one embodiment of the invention comprises a flat sheet or profile. The sheet or profile is prepared by extruding the copolyester composition to produce a flat sheet or profile. In this case, pellets of the copolyester composition are dried at 150°F to 160°F (65.6°C to 71.1°C) for 4 to 6 hours and are then fed to either a single screw extruder, a twin-screw extruder, or a conical twin screw extruder. The copolyester composition pellets are conveyed and compressed by the screw(s) down the extruder barrel to melt the pellets and discharge the melt from the end of the extruder. The melt is fed through a screening device to remove debris and/or a melt pump to reduce pressure variations caused by the extruder. The melt is then fed through a die to create a continuous flat sheet or into a profile die to create a continuous shape. In one embodiment of the invention comprising a flat sheet die, the melt is extruded onto a series of metal rolls, typically three, to cool the melt and impart a finish onto the sheet. The flat sheet is then conveyed in a continuous sheet for a distance or period of time sufficient to cool the sheet. The sheet is then trimmed to the desired width and then either rolled up into a roll or sheared or sawed into sheet form of desired dimensions. A flat sheet can also be formed into a shaped article through mechanical means to form a desired shaped article and then cooled either by spraying with water, by conveying through a water trough or by blowing air on the shaped article. The article then sawed or sheared to the desired length. In the case of a profile die, the die is designed to produce the desired shape of the profile. After exiting the die, the profile is then cooled either by spraying with water, by conveying through a water trough or by blowing air on the profile. The profile is then sawed or sheared to the desired length. In the case of a fiber, the fiber can be pulled out of the extrusion die spinnerets to the desired fiber diameter and crystallized for physical property enhancement.

Another embodiment of the invention comprises mixing neat copolyester pellets with a concentrate of flame retardant and then extruding the copolyester composition. The flame retardant concentrate can be compounded as a pellet. The pellets are dried at 150°F to 160°F (65.6°C to 71.1°C) for 4 to 6 hours before extrusion. The pellets are dried after being blended in a low-intensity mixer such as a ribbon blender, a tumbler, or conical screw blender. The pellets are then fed to an extruder including, but not limited to, a single screw extruder, a twin-screw extruder, or a conical twin screw extruder. The pellets are conveyed and compressed by the screw(s) down the extruder barrel to melt the pellets and discharge the melt from the end of the extruder. The melt is typically fed through a screening device to remove debris and/or a melt pump to reduce pressure variations caused by the extruder. The melt is then fed through a die to create a continuous flat sheet or into a profile die to create a continuous shape. In the case of the flat sheet die, the melt is extruded onto a series of metal rolls, typically three, to cool the melt and impart a finish onto the sheet. The flat sheet is then conveyed in a continuous sheet for a distance or period of time sufficient to cool the sheet. It can then be trimmed to the desired width and then either rolled up into a roll or sheared or sawed into sheet form. A flat sheet can also be formed into a shape through mechanical means to form a desired shape and then cooled either by spraying with water, through a water trough or by blowing air on the shaped article. It can then be sawed or sheared to the desired length. In the case of a film, the film may be produced and wound into a roll. In the case of a profile die, the die is designed to produce the desired shape of the article. After exiting the die, the profile can then be cooled either by spraying with water, through a water trough or by blowing air on the profile. It can then be sawed or sheared to the desired length. In the case of a fiber, the fiber can be pulled out of the extrusion die spinnerets to the desired fiber diameter and crystallized for physical property enhancement.

Another embodiment of the invention consists of mixing neat copolyester pellets with a flame retardant concentrate and then extruding them with either short or long strand glass fiber reinforcement or extruding them into a continuous glass fiber composite film, sheet or tape. The flame retardant can be compounded as a single pellet. The pellets are dried at 150° F to 160°F (65.6°C to 71.1°C) for 4 to 6 hours before extrusions. The pellets can be dried separately or together after being blended in a low-intensity mixer such as a ribbon blender, a tumbler, or conical screw blender. The pellets are then fed to either a single screw extruder, a twin-screw extruder, or a conical twin screw extruder. The pellets are conveyed and compressed by the screw(s) down the extruder barrel to melt the pellets and discharge the melt from the end of the extruder. The melt can be fed through a screening device to remove debris and/or a melt pump to reduce pressure variations caused by the extruder. The melt can then be fed through a die to create a continuous flat sheet or into a profile die to create a continuous shape. In the case of the flat sheet die, the melt is extruded onto a series of metal rolls, typically three, to cool the melt and impart a finish onto the sheet. The flat sheet is then conveyed in a continuous sheet to cool the sheet. It can then be trimmed to the desired width and then either rolled up into a roll or sheared or sawed into sheet form. A flat sheet can also be formed into a shape through mechanical means to form a desired shape and then cooled either by spraying with water, through a water trough or by blowing air on the profile. It can then be sawed or sheared to the desired length or a film may be produced and wound into a roll. In the case of a profile die, the die is designed to produce the desired shape of the article. After exiting the die, it can then be cooled either by spraying with water, through a water trough or by blowing air on the profile. It can then be sawed or sheared to the desired length. In the case of a fiber, the fiber can be pulled out of the extrusion die spinnerets to the desired fiber diameter and crystallized for physical property enhancement.

Another embodiment of the invention comprises extruding fully compounded pellets of the copolyester composition, comprising the copolyester and flame retardants, to produce an injection molded article. In this case, the pellets are dried at 150° F to 160°F (65.6°C to 71.1°C) for 4 to 6 hours to dry the pellets which are then fed to a reciprocating single screw extruder. The pellets are melted by the screw rotation and reciprocating action. Once the pellets reach the desired temperature, a gate is opened at the end of the extruder and the melted plastic is pumped by the screw into a heated mold to form an article of the desired shape. Once the mold is filled, a coolant is pumped through the mold to cool it and the melted plastic. Once the plastic has solidified, the mold is opened and the article is removed from the mold.

Another embodiment of the invention comprises mixing neat copolyester pellets with a concentrate of the flame retardant to form the copolyester composition and then extruding the copolyester composition to produce an injection molded article with or without short or long strand glass fiber reinforcement. The pellets are dried at 150°F to 160°F (65.6°C to 71.1°C) for 4 to 6 hours and are then fed to a reciprocating single screw extruder. The pellets can be dried separately or together after being blended in a low-intensity mixer including, but not limited to, a ribbon blender, a tumbler, or conical screw blender. Once the pellets reach the desired temperature, a gate is opened at the end of the extruder and the melted plastic is pumped by the screw into a heated mold to form an article of the desired shape. Once the mold is filled, a coolant is pumped through the mold to cool it and the melted plastic. Once the plastic has solidified, the mold is opened and the article is removed from the mold.

Another embodiment of the invention comprises mixing neat copolyester pellets with a concentrate of flame retardants to form the copolyester composition and then calendering the copolyester composition to produce a film product. Calendering is a well-known process of forming a film or sheet through successive co-rotating parallel rollers. In the calendering process, the pellets do not need to be pre-dried as the processing temperatures are low enough (350°F to 400°F; 177°C to 204°C) so degradation and hydrolysis of the polyester does not occur in a significant amount. The copolyester and flame retardant composition may be melted by using a high intensity mixer or extruder, including but not limited to, Buss Ko-kneader, a planetary gear extruder, Farrell continuous mixer, a twin screw extruder, or a Banbury^{®} type mixer. The melt is then conveyed to the calender. A calender typically consists essentially of a system of three or more large diameter heated rollers which convert high viscosity plastic into a film or sheet. The flat sheet or film is conveyed in a continuous web to cool the sheet. It can then be trimmed to the desired width and then either rolled up into a roll or sheared or sawed into sheet form.

Although the copolyester composition may be prepared by mixing or blending a concentrate of flame retardants and copolyester, the copolyester composition may alternatively be prepared by blending the flame retardants directly with the copolyester, using any of the mixing or blending processed previously described for making the copolyester composition by blending the flame retardant concentrate and the copolyester. The two flame retardants may be mixed or blended with the copolyester simultaneously or sequentially.

This invention can be further illustrated by the following examples of certain embodiments thereof, although it will be understood that these examples are included merely for purposes of illustration and are not intended to limit the scope of the invention unless otherwise specifically indicated.

### EXAMPLES

The following abbreviations are used: kN is kiloNewtons; J is Joules; % NB is percent no break; J/m is Joules per meter; LOI is Loss On Ignition; weight % is weight percent; TGA is thermographic analysis; TPA is terephthalic acid; TMCD is 2,2,4,4-tetramethylcyclobutane-1,3-diol and 1,4-CHDM is 1,4-cyclohexanedimethanol. PCTM is a glycol modified polyethylene cyclohexane dimethanol terephthalate.

### Formulations Tested:

| | Eastman MXF731 | Mold Release Concentrate | Firemaster 2100R | Color Master Batch |
|---|---|---|---|---|
| | wt% | wt% | wt% | wt% |
| Natural | 93 or 93.5 | 3 | 3.5 or 4 | 0 |
| White | 87 or 87.5 | 3 | 3.5 or 4 | 5 |
| Red | 92 or 92.5 | 3 | 3.5 or 4 | 1 |
| Black | 92 or 92.5 | 3 | 3.5 or 4 | 1 |

Natural, White, Red and Black versions were tested. Per UL 94 and UL 746C, Underwriters Laboratories certifies plastic formulations for end use applications and the effect of colorants must be evaluated. Underwriters Laboratories requires that natural formulation, the formulation with the highest loading of white pigment, the highest loading of black pigment, and the highest loading of an organic pigment, typically red, be tested for an "all-color" rating.

The identifications of the pigments and mold release concentrates can be seen below:
Red Master Batch

| Component | Wt% |
|---|---|
| *TX1000 | 87.498 |
| W-41 R-960 | 3.5 |
| R-88 Sandoplast Red | 3.15 |
| Y-85 Filester Yellow | 4.4 |
| R-91 Solvaperm Red BB | 1.44 |
| BK-59 Channel Black | 0.012 |

Black Masterbatch

| Component | Wt% |
|---|---|
| TX1000 | 87 |
| BK-64 Keyplast Black Saft | 13 |

White Master Batch

| Component | Wt% |
|---|---|
| TX1000 | 84.9966 |
| W-70, R-104 | 15 |
| BK-59 Channel Black | 0.0024 |
| R-69 PV Fast Red | 0.001 |

Mold Release
Concentrate

| Component | Wt% |
|---|---|
| TX1000 | 97 |
| Stearic Acid | 3 |

| | |
|---|---|
| * Eastman Tritan^{™} TX1000 | |

| Pigment Name | Color Index name | CAS # | Manufacturer |
|---|---|---|---|
| W-41 TiPure R-960 | Pigment White 6/77891 | 13463-67-7 | Chemours |
| W-70 TiPure R-104 | Pigment White 6/77891 | 13463-67-7 | Chemours |
| R-88 Solvaperm Red G, HS-310 | Solvent Red 135/564120 | 71902-17-5 | Clariant |
| R-91 Solvaperm Red BB, HS-325 | Solvent Red 195/confidential | 72968-71-9 | Clariant |
| R-69 PV Novaperm Fast Red HF4B | Pigment Red 187/12486 | 59487-23-9 | Clariant |
| Y-85 Oracet Yellow 144 FE | Pigment Yellow 147/60645 | 4118-16-5 | BASF |
| BK-59 MPC Channel Black | Pigment Black 7/77266 | 1333-86-4 | Milliken |
| BK-64 Keyplast Black SAFT (Dye) | Solvent Blend (no C.I. name) | | Milliken |

The following tables and figure summarize experimental results of the invention and counterexamples:
The materials referenced in the below tables are identified as:
Control - MXF 731 (Eastman Tritan^{™} Copolyester MXF 731)
FR Copolyester 1 - Eastman Tritan^{™} Copolyester MXF121
FR Copolyester 2 - Eastman Tritan^{™} Copolyester MXF221
FR Copolyester 3 - Developmental grade using Firemaster^{®} 2100R
PC/PBT1 - Sabic Valox^{™} 357U
PC/polyester 1 - Sabic Xylex^{™} HX7509HP
PC/polyester 2 - Trinseo Emerge^{™} 9500CR
PC/ABS1 - Covestro Bayblend^{®} FR3010
PC/ABS2 - Sabic Cycoloy^{™} CX2244ME
PC/ABS3 - Cycoloy^{™} C6600
PC - Lexan^{™} 950

Cleaning agents used in Chemical Resistance testing are identified below:
70% Isopropyl Alcohol - WalMart Equate brand
Super Sani-Cloth Wipes - PDI Healthcare Corporation
Virex^{®} Tb - Diversey Corporation
Household Bleach - The Clorox Company

Samples for all testing were compounded on a Coperion 25 mm twin screw compounding extruder to make pellets. Screw RPM was set at 200, Zone 1 was set at 180° C, zones 2 to 11 were set at 250° C, the die was set at 250° C. Extrudate exited a two-hole die into a water bath to be cooled then into a pelletizer. These pellets were then injection molded into 4" x 4" x .125" plaques and 1.5 mm and 3.0 x 12.7mm x 152 mm bars on a BOY 22 injection molding machine. Barrel temperature was set at 240 °C, mold at 70° C, injection pressure was set at 80 bar, cooling was set for 25 seconds, and ejection force was set at 125 bar.

Flame retardant testing was performed according to UL94. A total of 10 specimens (2 sets) are tested per thickness. Five specimens of each thickness were tested after conditioning for 48 hours at 23 degrees C and 50% RH. Five specimens of each thickness were tested after conditioning for 7 days at 70 degrees C. Each specimen was mounted with long axis vertical. Each specimen was supported such that its lower end was 10 mm above Bunsen burner tube. A blue 20 mm high flame was applied to the center of the lower edge of the specimen for 10 seconds and removed. If burning ceased within 30 seconds, the flame was reapplied for an additional 10 seconds. If the specimen dripped, particles were allowed to fall onto a layer of dry absorbent surgical cotton placed 300 mm below the specimen.

Notched Izod testing was performed per ASTM D256 and Light Transmission data was generated per ASTM D1003.

Chemical Resistance and Reverse Side Impact testing was performed as follows:
Testing was conducted using injection molded flex bars with length, width, and thickness of 5.0", 0.5", and 0.125", respectively. Bars were conditioned at 23°C / 50% RH for a minimum of 72 hr. Bars were clamped into a constant strain fixture or a 3-point bend fixture at 1.5% strain and exposed to test oil using a cotton pad saturated with the test chemical, where the pad was placed on the top surface of the bar. After the test chemicals were applied to the bars on the side without ejector pin marks, the strain fixtures with bars attached were sealed in polyethylene bags for 24 hours at nominal temperature of 23°C, after which the bars were wiped clean and removed from the strain fixture.

After exposure, the bars were tested at 23°C for reverse-side impact. The test apparatus was a CEAST Pendulum Impact Tester equipped with a 15-Joule hammer. Bars were positioned in a 2-inch span fixture, with the non-chemically exposed side facing the hammer. Control bars (exposed to water) were impact tested in addition to bars that were exposed to the test chemicals. The comparison of results between the controls and the chemically exposed bars was used to calculate percent retention of original impact energy.

Ejection force data was generated by using an injection mold instrumented with a Kistler load cell to measure ejection forces. This mold produces a straight sided "cup" approximately 3" tall, 2 5/8" in diameter, and approximately 0.120" thick. Process conditions were barrel temperature at 520 F, mold temperature at 120, injection pressure limit 1000 psi, screw speed 150 rpm, pack pressure 800 psi, injection time 3.2 seconds. Peak ejection force was measured and recorded. Mold filling viscosity was measured per ASTM D3835 and viscosity reported at a shear rate of 1200 -s at 280° C. Melt flow index was measured per ASTM D1238 at g/10 min @ 260 °C 2.16 kg load.

**Table 1. UL 94 Results**

| | 3.5 % Flame Retardant | | | | 4 % Flame Retardant | | | |
|---|---|---|---|---|---|---|---|---|
| Color | 1.5 mm Unage d | 3 mm Unage d | 1.5 mm Aged | 3 mm Aged | 1.5 mm Unage d | 3 mm Unage d | 1.5 mm Aged | 3 mm Aged |
| Natural | V2 | V2 | Fail | V2 | V2 | V2 | V2 | V2 |
| White | Fail | V2 | Fail/V 2 | Fail/V 2 | V2 | V2 | Fail/V2 | V2 |
| Black | Fail | V2 | V2 | V2 | V2 | V2 | V2 | V2 |
| Red | V2 | V2 | V2 | V2 | V2 | V2 | V2 | V2 |

**Table 2. Chemical Resistance**

| Material | Control (joules) | Virex TB | Super Sani-Cloth | Clorox Bleach | IPA |
|---|---|---|---|---|---|
| | | | | | |
| | | % retention of Impact Energy to Break | | | |
| FR Copolyester 1 | 4.8 | 90 ± 1 | 87 ± 2 | 91 ± 2 | 82 ± 1 |
| FR Copolyester 2 | 5.2 | 94 ± 2 | 83 ± 1 | 95 ± 3 | 85 ± 3 |
| FR Copolyester 3 | 4.7 | 98 ± 4 | 95 ± 4 | 97 ± 3 | 93 ± 1 |
| PC/PBT 1 | 5.3 | 8 ± 3 | 91 ± 8 | 95 ± 5 | 30 ± 3 |
| PC/polyester 1 | 5.5 | 6 ± 1 | 75 ± 28 | 94 ± 3 | 47 ± 10 |
| PC/polyester 2 | 5.8 | 11 ± 2 | 26 ± 1 | 65 ± 51 | 23 ± 3 |
| PC/ABS1 | 6.8 | 15 ± 1 | 16 ± 1 | 92 ± 1 | 16 ± 1 |
| PC/ABS2 | 6.6 | Break on jig | 42 ± 37 | 100 ± 1 | 15 ± 1 |

**Table 3. Processing data**

| Material | De-molding | Mold-filling viscosity | Melt flow rate |
|---|---|---|---|
| | Part ejection force* (lbf) | (1200 s⁻¹ @280 °C; Pa·s) | (g/10 min @ 260 °C 2.16 kg load) |
| FR Copolyester 1 | 475 | 276 | 7-9 |
| FR Copolyester 2 | 963 | 170 | 8-11 |
| FR Copolyester 3 | 506 | 304 | 6-10 |
| PC/ABS 1 | 502 | 100 | 21 |
| PC/ABS 2 | 578 | 200a | 17b |
| PC/PBT 1 | - | 175 | 8c |
| | | | |
| a: Data reported at 1000 s⁻¹ @260 °C | | | |
| b: Data reported at 260 °C 5 kg load | | | |
| c: Data reported at 250 °C 5 kg load | | | |

**Table 4. Notched Izod and Light Transmission Data**

| **Notched Izod and Light Transmission Data** | | | | | | | | | |
|---|---|---|---|---|---|---|---|---|---|
| **Property** | **Test meth od** | **Cont rol** | **FR Copoly ester 1** | **FR Copoly ester 2** | **FR Copoly ester 3** | **PC 1** | **PC/A BS 3** | **PC /Polye ster 2** | **PC/P BT 1** |
| **Izod Impact Strength (J/m)** | **ASTM D256** | 860 | 150 to 200 | 1080 | 1000 | 640 - 800 | 530 - 550 | 1000 - 1290 | 670 |
| **Transpar ency** * | **ASTM D100 3** | 91% | n/a | 81% | 90% | | | | |
| **Haze *** | **ASTM D100 3** | <1 % | n/a | 2% | 0.50% | Cle ar | Opaq ue | Opaqu e | Opa que |

**Example 1:** Table 1 above contains UL 94 data for 1.5- and 3-mm samples with 3.5 and 4% Firemaster 2100R. The 1.5 mm and 3 had multiple failures at 3.5% Firemaster 2100R while at 4%, the 1.5 mm aged sample initially failed V2 but upon retest, which is allowable and part of the UL 94 standard, a V2 rating was achieved.

**Example 2 and Comparative Example 1:** Table 2 above contains chemical resistance data tested as described above. The results for FR Copolyesters 1, 2 and 3 all demonstrate excellent retention of impact strength for the cleaning agents tested while competitive samples showed much worse resistance to Virex Tb, Super Sani Cloth and 70% Isopropyl Alcohol.

**Example 3 and Comparative Example 2:** Table 3 above contains part ejection force, viscosity and melt flow rate data. FR Copolyester 3 shows equivalent part ejection force except for FR Copolyester 2 having very high mold release force. While mold filling viscosity is higher for FR Copolyester 3 is not as low as some of the other FR Copolyesters tested and the PC/ABS and PC/PBT materials, the melt flow rate for FR Copolyester 3 is equivalent to Copolyester 1, 2 and PC/PBT 1.

**Example 4 and Comparative Example 3.** Table 4 above contains notched Izod impact strength and light transmission data. A control material with no FR or colorant was used for comparative purposes. FR Copolyesters 2 and 3 are clear and have low haze values and have high notched izod impact strengths. FR Copolyester 1, while meeting a UL 94 V2 rating, is translucent/opaque and has a low notched Izod impact strength. Comparing FR Copolyester 3 to competitive PC and PC blends, FR Copolyester is clear compared to the PC blends and has higher notched Izod impact strength compared to PC, PC/ABS 3 and PC/PBT 1.

## Claims

1. A copolyester composition comprising:
(a) from greater than 90 to about 98 weight % of the copolyester, the copolyester comprising:
(i) a diacid component comprising
from 70 to 100 mole % residues of terephthalic acid,
from 0 to 30 mole % residues of a modifying aromatic diacid having from 8 to 12 carbon atoms, and
from 0 to 10 mole % residues of an aliphatic dicarboxylic acid; and
(ii) a glycol component comprising
from 1 to 95 mole % cyclohexanedimethanol residues and
from 5 to 99 mole % of a modifying glycol having 2 to 20 carbon atoms;
(b) from about 2 to about 10 weight % of a flame retardant comprising a brominated compound selected from the group consisting of decabromodiphenyl ethane, brominated cyclohydrocarbons, tetrabromo bisphenol A and hexabromo cyclodecane,
wherein the copolyester composition has a UL 94 V-2 rating,
wherein the notched Izod impact strength is greater than about 400 Joules/m measured according to ASTM D256;
wherein the copolyester composition in the form of a placque at approximately 3.2 mm thickness has less than about 10 % haze according to ASTM D1003, and
wherein the weight % is based on the weight of the copolyester, wherein the total mole % of the dicarboxylic acid component is 100 mole % and the total mole % of the glycol component is 100 mole %.

2. The copolyester composition according to claim 1 wherein the copolyester composition further comprises a drip suppressant or an impact modifier or mixtures thereof.

3. The copolyester composition of claim 1, wherein the glycol component comprises from about 60 to about 95 mole % cyclohexanedimethanol residues and
from 5 to about 40 mole % of 2,2,4,4-tetramethylcyclobutane-1,3-diol residues.

4. A method of making a copolyester composition, the method comprising blending
(a) from greater than 90 to about 98 weight % of the copolyester, the copolyester comprising:
(i) a diacid component comprising
from 70 to 100 mole % residues of terephthalic acid,
from 0 to 30 mole % residues of a modifying aromatic diacid having from 8 to 12 carbon atoms, and
from 0 to 10 mole % residues of an aliphatic dicarboxylic acid; and
(ii) a glycol component comprising
from 1 to 95 mole % cyclohexanedimethanol residues and
from 5 to 99 mole % of a modifying glycol having 2 to 20 carbon atoms; and
(b) from about 2 to about 10 weight % of a flame retardant comprising a brominated compound selected from the group consisting of decabromodiphenyl ethane, brominated cyclohydrocarbons, tetrabromo bisphenol A and hexabromo cyclodecane,
wherein the copolyester composition has a UL 94 V-2 rating,
wherein the notched Izod impact strength is greater than about 400 Joules/m measured according to ASTM D256 ;
wherein the copolyester composition in the form of a placque at approximately 3.2 mm thickness has less than about 10 % haze according to ASTM D1003;
wherein the weight % is based on the weight of the copolyester, wherein the total mole % of the dicarboxylic acid component is 100 mole % and the total mole % of the glycol component is 100 mole %.

5. The method of making a copolyester composition according to claim 4, wherein (a) the copolyester is present in an amount of from about 93 to about 95 weight %; and (b) the flame retardant is present in an amount of from about 3.5 to about 7 weight.

6. The method of making a copolyester composition according to claim 5, wherein the blending comprises at least one of twin screw compounding, two-rotor continuous compounding, Banbury^{®} batch mixer or a combination thereof.

7. An article comprising a copolyester composition comprising:
(a) from greater than 90 to about 98 weight % of the copolyester, the copolyester comprising:
(i) a diacid component comprising
from 70 to 100 mole % residues of terephthalic acid,
from 0 to 30 mole % residues of a modifying aromatic diacid having from 8 to 12 carbon atoms, and
from 0 to 10 mole % residues of an aliphatic dicarboxylic acid; and
(ii) a glycol component comprising
from 1 to 95 mole % cyclohexanedimethanol residues and
from 5 to 99 mole % of a modifying glycol having 2 to 20 carbon atoms;
(b) from about 2 to about 10 weight % of a flame retardant comprising a brominated compound selected from the group consisting of decabromodiphenyl ethane, brominated cyclohydrocarbons, tetrabromo bisphenol A and hexabromo cyclodecane,
wherein the copolyester composition has a UL 94 V-2 rating,
wherein the notched Izod impact strength is greater than about 400 Joules/m measured according to ASTM D256;
wherein the article in the form of a placque at approximately 3.2 mm thickness has less than about 10 % haze according to ASTM D1003,
wherein the weight % is based on the weight of the copolyester, wherein the total mole % of the dicarboxylic acid component is 100 mole % and the total mole % of the glycol component is 100 mole %.

8. The article of claim 7, wherein the glycol component comprises
from about 60 to about 95 mole % cyclohexanedimethanol residues and
from 5 to about 40 mole % of 2,2,4,4-tetramethylcyclobutane-1,3-diol residues.

9. The article of any one of claims 7 or 8, wherein the article has less than about 5 % haze.

10. The article of any one of claims 7 to 9, wherein the article is produced by extrusion, extrusion blow molding, injection molding, blown film process or calendering.

11. The article of any one of claims 7 to 10, wherein the article is in the form of a film, sheet, molded part, or profile.

## Patentansprüche

1. Eine Copolyesterzusammensetzung, aufweisend:
(a) von mehr als 90 bis etwa 98 Gewichtsprozent eines Copolyesters, wobei der Copolyester aufweist:
(i) eine Dicarbonsäurekomponente, aufweisend
70 bis 100 Mol-% Terephthalsäurereste,
von 0 bis 30 Mol.-% Reste einer modifizierenden aromatischen Disäure mit 8 bis 12 Kohlenstoffatomen und
von 0 bis 10 Mol-% Rückstände einer aliphatischen Dicarbonsäure und
(ii) eine Glykolkomponente, aufweisend
1 bis 95 Mol-% Cyclohexandimethanolreste und
5 bis 99 Mol-% eines modifizierenden Glykols mit 2 bis 20 Kohlenstoffatomen,
(b) etwa 2 bis etwa 10 Gewichtsprozent eines Flammschutzmittels, das eine bromierte Verbindung aufweist, die aus der Gruppe ausgewählt ist, die aus Decabromdiphenylethan, bromierten Cyclokohlenwasserstoffen, Tetrabrombisphenol A und Hexabromcyclodecan besteht,
wobei die Copolyesterzusammensetzung eine UL 94 V-2-Einstufung aufweist,
wobei die Kerbschlagzähigkeit gemessen nach ASTM D256 größer als etwa 400 Joule/m ist,
wobei die Copolyesterzusammensetzung in Form einer Platte mit einer Dicke von etwa 3,2 mm gemäß ASTM D1003 weniger als etwa 10 % Trübung aufweist, und
wobei der Gewichtsprozentsatz auf dem Gewicht des Copolyesters basiert, wobei der Gesamtmolprozentsatz der Dicarbonsäurekomponente 100 Mol-% und der Gesamtmolprozentsatz der Glykolkomponente 100 Mol-% beträgt.

2. Copolyesterzusammensetzung gemäß Anspruch 1, wobei die Copolyesterzusammensetzung ferner einen Tropfhemmer oder einen Schlagzähmodifikator oder Mischungen davon umfasst.

3. Copolyesterzusammensetzung nach Anspruch 1, wobei die Glykolkomponente aufweist
etwa 60 bis etwa 95 Mol-% Cyclohexandimethanolreste und
von 5 bis etwa 40 Mol-% 2,2,4,4-Tetramethylcyclobutan-1,3-Reste.

4. Verfahren zur Herstellung einer Copolyesterzusammensetzung, wobei das Verfahren das Mischen umfasst von
(a) mehr als 90 bis etwa 98 Gewichtsprozent des Copolyesters, wobei der Copolyester aufweist:
(i) eine Dicarbonsäurekomponente, aufweisend
70 bis 100 Mol-% Terephthalsäurereste,
von 0 bis 30 Mol.-% Reste einer modifizierenden aromatischen Disäure mit 8 bis 12 Kohlenstoffatomen und
von 0 bis 10 Mol-% Rückstände einer aliphatischen Dicarbonsäure und
(ii) eine Glykolkomponente, aufweisend
1 bis 95 Mol-% Cyclohexandimethanolreste und
5 bis 99 mol-% eines modifizierenden Glykols mit 2 bis 20 Kohlenstoffatomen und
(b) etwa 2 bis etwa 10 Gewichtsprozent eines Flammschutzmittels, das eine bromierte Verbindung aufweist, die aus der Gruppe ausgewählt ist, die aus Decabromdiphenylethan, bromierten Cyclokohlenwasserstoffen, Tetrabrombisphenol A und Hexabromcyclodecan besteht,
wobei die Copolyesterzusammensetzung eine UL 94 V-2-Einstufung aufweist,
wobei die Kerbschlagzähigkeit nach Izod größer als etwa 400 Joule/m ist, gemessen gemäß ASTM D256,
wobei die Copolyesterzusammensetzung in Form einer Platte mit einer Dicke von etwa 3.2 mm gemäß ASTM D10 weniger als etwa 10 % Trübung aufweist und
wobei der Gewichtsprozentsatz auf dem Gewicht des Copolyesters basiert, wobei der Gesamtmolprozentsatz der Dicarbonsäurekomponente 100 Mol-% und der Gesamtmolprozentsatz der Glykolkomponente 100 Mol-% beträgt.

5. Verfahren zur Herstellung einer Copolyesterzusammensetzung gemäß Anspruch 4, wobei (a) der Copolyester in einer Menge von etwa 93 bis etwa 95 Gew.-% vorliegt und (b) das Flammschutzmittel in einer Menge von etwa 3,5 bis etwa 7 Gew.-% vorliegt.

6. Verfahren zur Herstellung einer Copolyesterzusammensetzung gemäß Anspruch 5, wobei das Mischen mindestens eines der folgenden Verfahren umfasst: Doppelschneckenextrusion, kontinuierliche Zwei-Rotoren-Extrusion, Banbury^{®}-Chargenmischer oder eine Kombination davon.

7. Gegenstands aufweisend eine Copolyesterzusammensetzung, die folgendes aufweist:
(a) von mehr als 90 bis etwa 98 Gewichtsprozent eines Copolyesters, wobei der Copolyester aufweist:
(i) eine Dicarbonsäurekomponente, aufweisend
70 bis 100 Mol-% Terephthalsäurereste,
von 0 bis 30 Mol.-% Reste einer modifizierenden aromatischen Disäure mit 8 bis 12 Kohlenstoffatomen und
von 0 bis 10 Mol-% Rückstände einer aliphatischen Dicarbonsäure und
(ii) eine Glykolkomponente, aufweisend
1 bis 95 Mol-% Cyclohexandimethanolreste und
5 bis 99 Mol-% eines modifizierenden Glykols mit 2 bis 20 Kohlenstoffatomen,
(b) etwa 2 bis etwa 10 Gewichtsprozent eines Flammschutzmittels, das eine bromierte Verbindung aufweist, die aus der Gruppe ausgewählt ist, die aus Decabromdiphenylethan, bromierten Cyclokohlenwasserstoffen, Tetrabrombisphenol A und Hexabromcyclodecan besteht,
wobei die Copolyesterzusammensetzung eine UL 94 V-2-Einstufung aufweist,
wobei die Kerbschlagzähigkeit gemessen nach ASTM D256 größer als etwa 400 Joule/m ist,
wobei der Gegenstand in Form einer Platte mit einer Dicke von etwa 3,2 mm gemäß ASTM D1003 eine Trübung von weniger als etwa 10 % aufweist,
wobei der Gewichtsprozentsatz auf dem Gewicht des Copolyesters basiert, wobei der Gesamtmolprozentsatz der Dicarbonsäurekomponente 100 Mol-% und der Gesamtmolprozentsatz der Glykolkomponente 100 Mol-% beträgt.

8. Gegenstands nach Anspruch 7, wobei die Glykolkomponente aufweist
etwa 60 bis etwa 95 Mol-% Cyclohexandimethanolreste und
von 5 bis etwa 40 Mol-% 2,2,4,4-Tetramethylcyclobutan-1,3-Reste.

9. Gegenstand nach einem der Ansprüche 7 oder 8, wobei der Gegenstand weniger als etwa 5 % Trübung aufweist.

10. Gegenstand nach einem der Ansprüche 7 bis 9, wobei der Gegenstand durch Extrusion, Extrusionsblasformen, Spritzgießen, Blasfolienverfahren oder Kalandrieren hergestellt wird.

11. Gegenstand nach einem der Ansprüche 7 bis 10, wobei der Gegenstand die Form einer Folie, einer Platte, eines Formteils oder eines Profils hat.

## Revendications

1. Composition de copolyester comprenant :
(a) de plus de 90 à environ 98 % en poids du copolyester, le copolyester comprenant :
(i) un composant diacide comprenant
de 70 à 100 % en mole de résidus d'acide téréphtalique,
de 0 à 30 % en mole de résidus d'un diacide aromatique modificateur ayant de 8 à 12 atomes de carbone, et
de 0 à 10 % en mole de résidus d'un acide dicarboxylique aliphatique ; et
(ii) un composant glycol comprenant
de 1 à 95 % en mole de résidus de cyclohexanediméthanol et
de 5 à 99 % en mole d'un glycol modificateur ayant de 2 à 20 atomes de carbone ;
(b) d'environ 2 à environ 10 % en poids d'un agent ignifuge comprenant un composé bromé choisi parmi le groupe constitué de décabromodiphényl éthane, d'hydrocarbures cycliques bromés, de tétrabromobisphénol A et d'hexabromocyclodécane,
dans laquelle la composition de copolyester a un indice V-2 selon le test UL-94,
dans laquelle la résistance au choc izod sur éprouvette entaillée est supérieure à environ 400 joules/m telle que mesurée selon la norme ASTM D256 ;
dans laquelle la composition de copolyester sous forme d'une plaque d'environ 3,2 mm d'épaisseur a une valeur de trouble optique inférieure à environ 10 % selon la norme ASTM D1003, et
dans laquelle le % en poids est basé sur le poids du copolyester, dans laquelle le % en mole total du composant acide dicarboxylique est de 100 % en mole et le % en mole total du composant glycol est de 100 % en mole.

2. Composition de copolyester selon la revendication 1, dans laquelle la composition de copolyester comprend en outre un agent anti-goutte ou un modificateur de résistance au choc ou des mélanges de ceux-ci.

3. Composition de copolyester selon la revendication 1, dans laquelle le composant glycol comprend d'environ 60 à environ 95 % en mole de résidus de cyclohexanediméthanol et de 5 à environ 40 % en mole de résidus de 2,2,4,4-tétraméthylcyclobutane-1,3-diol.

4. Procédé de fabrication d'une composition de copolyester, le procédé comprenant le mélange
(a) de plus de 90 à environ 98 % en poids du copolyester, le copolyester comprenant :
(i) un composant diacide comprenant
de 70 à 100 % en mole de résidus d'acide téréphtalique,
de 0 à 30 % en mole de résidus d'un diacide aromatique modificateur ayant de 8 à 12 atomes de carbone, et
de 0 à 10 % en mole de résidus d'un acide dicarboxylique aliphatique ; et
(ii) un composant glycol comprenant
de 1 à 95 % en mole de résidus de cyclohexanediméthanol et
de 5 à 99 % en mole d'un glycol modificateur ayant de 2 à 20 atomes de carbone ; et
(b) d'environ 2 à environ 10 % en poids d'un agent ignifuge comprenant un composé bromé choisi parmi le groupe constitué de décabromodiphényl éthane, d'hydrocarbures cycliques bromés, de tétrabromobisphénol A et d'hexabromocyclodécane,
dans lequel la composition de copolyester a un indice V-2 selon le test UL-94,
dans lequel la résistance au choc izod sur éprouvette entaillée est supérieure à environ 400 joules/m telle que mesurée selon la norme ASTM D256 ;
dans lequel la composition de copolyester sous forme d'une plaque d'environ 3,2 mm d'épaisseur a une valeur de trouble optique inférieure à environ 10 % selon la norme ASTM D1003 ;
dans lequel le % en poids est basé sur le poids du copolyester, dans lequel le % en mole total du composant acide dicarboxylique est de 100 % en mole et le % en mole total du composant glycol est de 100 % en mole.

5. Procédé de fabrication d'une composition de copolyester selon la revendication 4, dans lequel (a) le copolyester est présent en une quantité comprise entre environ 93 et environ 95 % en poids ; et (b) l'agent ignifuge est présent en une quantité comprise entre environ 3,5 et environ 7 % en poids.

6. Procédé de fabrication d'une composition de copolyester selon la revendication 5, dans lequel le mélange comprend au moins un élément parmi un compoundage à double vis, un compoundage en continu à deux rotors, un mélangeur Banbury^{®} ou une combinaison de ceux-ci.

7. Article comprenant une composition de copolyester comprenant :
(a) de plus de 90 à environ 98 % en poids du copolyester, le copolyester comprenant :
(i) un composant diacide comprenant
de 70 à 100 % en mole de résidus d'acide téréphtalique,
de 0 à 30 % en mole de résidus d'un diacide aromatique modificateur ayant de 8 à 12 atomes de carbone, et
de 0 à 10 % en mole de résidus d'un acide dicarboxylique aliphatique ; et
(ii) un composant glycol comprenant
de 1 à 95 % en mole de résidus de cyclohexanediméthanol et
de 5 à 99 % en mole d'un glycol modificateur ayant de 2 à 20 atomes de carbone ;
(b) d'environ 2 à environ 10 % en poids d'un agent ignifuge comprenant un composé bromé choisi parmi le groupe constitué de décabromodiphényl éthane, d'hydrocarbures cycliques bromés, de tétrabromobisphénol A et d'hexabromocyclodécane,
dans lequel la composition de copolyester a un indice V-2 selon le test UL-94,
dans lequel la résistance au choc izod sur éprouvette entaillée est supérieure à environ 400 joules/m telle que mesurée selon la norme ASTM D256 ;
dans lequel l'article sous forme d'une plaque d'environ 3,2 mm d'épaisseur a une valeur de trouble optique inférieure à environ 10 % selon la norme ASTM D1003,
dans lequel le % en poids est basé sur le poids du copolyester, dans lequel le % en mole total du composant acide dicarboxylique est de 100 % en mole et le % en mole total du composant glycol est de 100 % en mole.

8. Article selon la revendication 7, dans lequel le composant glycol comprend d'environ 60 à environ 95 % en mole de résidus de cyclohexanediméthanol et de 5 à environ 40 % en mole de résidus de 2,2,4,4-tétraméthylcyclobutane-1,3-diol.

9. Article selon l'une quelconque des revendications 7 ou 8, dans lequel l'article a une valeur de trouble optique inférieure à environ 5 %.

10. Article selon l'une quelconque des revendications 7 à 9, dans lequel l'article est produit par extrusion, moulage par extrusion-soufflage, moulage par injection, procédé de film soufflé ou calandrage.

11. Article selon l'une quelconque des revendications 7 à 10, dans lequel l'article est sous la forme d'un film, d'une feuille, d'une pièce moulée ou d'un profilé.
